# EUROPEAN PATENT SPECIFICATION

(11) **EP 3 584 624 B1**
(45) Date of publication and mention of the grant of the patent: **21.07.2021**
(21) Application number: 17896844.2
(22) Date of filing: 18.09.2017
(51) Int. Cl.: G02B 26/08, G02B 27/64, G02B 13/00, G03B 3/10, G02B 7/02, G02B 7/182

(54) **REFLECTION SYSTEM DRIVING DEVICE HAVING MULTI-AXIS STRUCTURE**
ANSTEUERUNGSVORRICHTUNG EINES REFLEXIONSSYSTEMS MIT MEHRACHSIGER STRUKTUR
DISPOSITIF D'ENTRAÎNEMENT DE SYSTÈME DE RÉFLEXION AYANT UNE STRUCTURE À AXES MULTIPLES

(30) Priority: 20.02.2017 KR 20170022275; 28.04.2017 KR 20170054807
(43) Date of publication of application: 25.12.2019
(73) Proprietor: Jahwa Electronics Co., Ltd., Cheongju-si, Chungcheongbuk-do 28139 (KR)
(72) Inventor: PARK, Chul Soon, Cheonan-si Chungcheongnam-do 31154 (KR); SEOL, Jin Soo, Cheongju-si Chungcheongbuk-do 28424 (KR); LEE, Kyoung Yong, Cheongju-si Chungcheongbuk-do 28745 (KR); SON, Myung Gyun, Yeongju-si Gyeongsangbuk-do 36132 (KR); SON, Jung Min, Ganghwa-gun Incheon 23033 (KR)
(74) Representative: dompatent von Kreisler Selting Werner - Partnerschaft von Patent- und Rechtsanwälten mbB
(86) International application number: PCT/KR2017/010171
(87) International publication number: WO 2018/151388

(56) References cited:
- EP-A2- 0 909 087
- EP-A2- 3 518 520
- JP-A- 2009 241 735
- JP-A- 2017 003 717
- KR-A- 20050 065 559
- KR-A- 20060 087 282
- KR-A- 20130 009 936
- US-A- 6 130 993
- US-A1- 2015 002 683

## Description

### TECHNICAL FIELD

The present disclosure relates to an apparatus for driving an optical-reflector, and more particularly, to an apparatus for driving an optical-reflector for optical image stabilization (OIS) by operating the optical-reflector for changing a path of light in multi-axial directions.

### BACKGROUND ART

Along with the development of hardware techniques and the change of user environments or the like, various and complicated functions are integrally implemented at a mobile terminal such as a smart phone, in addition to a basic function for communication.

A representative example is a camera module having an auto focus (AF) function and an optical image stabilization (OIS) function. Also, a voice recognition function, a fingerprint recognition function, an iris recognition function or the like are loaded on a portable terminal for authentication or security, and it is attempted to mount a zoom lens in which a plurality of lenses are grouped to adjust a focus distance variously.

A zoom lens is configured to have a plurality of lenses or lens groups, arranged in an optical axis direction in which light is input, different from a general lens, and thus the zoom lens has a longer length in its optical axis direction in comparison to general lenses. Light passing through the zoom lens is put into a photographing device such as a charge-coupled device (CCD) and a complementary metal-oxide semiconductor (CMOS), and then image data is generated therefrom by means of following processing.

When a zoom lens is installed to stand on a main board of a portable terminal like other general lenses, namely in a direction perpendicular to the main board, the portable terminal should ensure a space as much as a height of the zoom lens (or, a length in the optical axis direction), and so it is not easy to optimize the zoom lens for a small and light design, which is an intrinsic characteristic aimed by the portable terminal.

To solve this problem, there has been proposed a method for reducing a size of an optical system by adjusting an angle and size of lenses, an interval thereof, a focus distance or the like, but this method intrinsically has a limit since it is directed to physically reduce the size of a zoom lens or a zoom lens barrel, and also the intrinsic features of the zoom lens may be deteriorated.

In addition, an optical image stabilization (OIS) method generally applied in the art correctively move a lens or a lens module in two directions (X-axis and Y-axis directions) on a plane perpendicular to an optical axis direction (Z axis). If this method is applied to a zoom lens as it is, there are problems such as low space utilization caused by the shape, structure, functions or the like of the zoom lens, an increased volume of the device, and difficulty in ensuring precision.

Further, there has also been attempted a method for axially coupling an optical-reflector and rotating the optical-reflector in a certain direction to correct shaking of a photographed image based on a lens or a photographing device (CCD, CMOS or the like).

However, in this method, a load of the optical-reflector or a support to which the optical-reflector is coupled is applied in a specific direction, and also the force caused by the load is differentially applied according to a rotating distance of the optical-reflector. For this reason, the intensity of a driving power for moving the optical-reflector is not functionally proportional to the movement of the optical-reflector, and thus the optical-reflector does not linearly move according to the intensity of the driving power, which does not ensure precise control of optical image stabilization.

Moreover, if the optical-reflector does not move linearly, when the hall sensor is used to sense the movement of the optical-reflector, namely the magnet mounted to the optical-reflector, it should be considered not only that the change of magnetic field generated at the magnet is not changed linearly but also that it is difficult to precisely sense the movement of the optical-reflector because the amount of change is small.

In addition, if the same kind of magnets are used for driving the moving object in various directions, the magnetic fields of the magnets or the driving coils may interfere with each other, thereby causing a problem in precise driving in each direction.

US 6 130 993 A discloses an apparatus for driving an optical-reflector with a multi-axial structure, comprising: an optical-reflector to reflect light to a lens; a middle frame having a groove rail formed therein; a base frame having a guide rail formed corresponding to the groove rail; a first driving unit configured to move a support frame in a first direction on the basis of the middle frame; and a second driving unit configured to move the middle frame in a second direction perpendicular to the first direction, on the basis of the base frame. Further apparatus for driving an optical-reflector are disclosed in EP 3 518 520 A2, US 2015/002683 A1 and EP 0 909 087 A2.

### DISCLOSURE

### Technical Problem

The present disclosure is designed to solve the problems of the related art, and therefore the present disclosure is directed to providing an apparatus for driving an optical-reflector for OIS, which may ensure precise control of the optical-reflector in all directions for optical image stabilization by complexly applying a structure for guiding rotation of the optical-reflector and balls physically supporting the optical-reflector or using different kinds of magnets to give different driving forces in different axial directions.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The invention is defined by the features of claim 1. According to the present disclosure, there is provided an apparatus for driving an optical-reflector with a multi-axial structure, comprising: a support frame having a first groove rail formed therein; an optical-reflector disposed on the support frame to reflect light to a lens; a middle frame having a first guide rail corresponding to the first groove rail and a second groove rail formed therein; a base frame having a second guide rail formed corresponding to the second groove rail; a first driving unit configured to move the support frame in a first direction on the basis of the middle frame; and a second driving unit configured to move the middle frame in a second direction perpendicular to the first direction, on the basis of the base frame.

Preferably, the apparatus for driving an optical-reflector with a multi-axial structure may further comprise a first ball disposed between the first groove rail and the first guide rail; and a second ball disposed between the second groove rail and the second guide rail.

Also, the first groove rail of the present disclosure has a rounded shape, and the support frame rotates along a path corresponding to the first groove rail or the first guide rail.

In addition, the second groove rail of the present disclosure has a rounded shape, and the middle frame rotates along a path corresponding to the second groove rail or the second guide rail.

Preferably, the middle frame of the present disclosure may include a first plate and a second plate perpendicular to the first plate, and in this case, the first guide rail may be formed at an inner side of the first plate, and the second groove rail may be formed at an outer side of the second plate.

In addition, the first groove rail and the second groove rail of the present disclosure may be formed perpendicular to each other.

Further, the support frame of the present disclosure may have a first magnet, the middle frame may have a second magnet, and in this case, the first driving unit may be a first coil which generates an electromagnetic force to the first magnet, and the second driving unit may be a second coil which generates an electromagnetic force to the second magnet.

More preferably, the first magnet of the present disclosure may be respectively provided at a left side and a right side symmetric to each other based on a center portion of the support frame, and in this case, the apparatus may further comprise a first yoke provided at the middle frame at a location facing the first magnet, respectively.

In addition, the first groove rail of the present disclosure may be arranged in parallel on one surface of the support frame, the support frame may include a mounting portion protruding at a center portion of the two first groove rails so that the first magnet is mounted thereto, and the middle frame may have an opening formed at a portion facing the first magnet.

In an embodiment of the present disclosure, any one of the first and second magnets may have a single polarity, and the other has two or more polarities.

Further, the apparatus of the present disclosure may further comprise a sub magnet located on the support frame to be spaced apart from the first magnet; and a hall sensor positioned corresponding to the sub magnet, wherein the first magnet may have a single polarity at a surface thereof that faces the first coil, and the sub magnet may have two or more polarities at a surface thereof that faces the hall sensor.

In an embodiment of the present disclosure, the apparatus of the present disclosure may further comprise a sub magnet located on the support frame to be spaced apart from the second magnet; and a hall sensor positioned corresponding to the sub magnet, wherein the second magnet may have a single polarity at a surface thereof that faces the second coil, and the sub magnet may have two or more polarities at a surface thereof that faces the hall sensor.

In addition, the middle frame of the present disclosure may further include a yoke at a side thereof that faces the first magnet, and the base frame may further include a yoke at a side thereof that faces the second magnet.

Further, in the present disclosure, the first guide rail may be formed at an inner side of the middle frame, and the second groove rail may be formed at an outer side of the middle frame.

### Advantageous Effects

According to an embodiment of the present disclosure, since optical image stabilization in all directions is performed by an optical-reflector which inputs light into a lens, a structure for optical image stabilization may not be coupled to a zoom lens or a zoom lens carrier which has a relatively large size, and thus it is possible to minimize a size of the apparatus and also improve space utilization of the apparatus further.

According to another embodiment of the present disclosure, since rotation of the optical-reflector which changes a path of light is physically supported and guided by a guiding structure with a rounded shape and a point-contact structure with balls, the optical-reflector may physically rotate more flexibly. Also, since the optical-reflector may be moved in functionally proportion to a driving power for moving the optical-reflector, it is possible to improve the precision of optical image stabilization, and also minimize a power required for the optical image stabilization.

In the present disclosure, since structures for rotating and supporting the optical-reflector may be systematically combined, OIS in X-axial and Y-axial direction may be performed independently, and thus it is possible to perform optical image stabilization by adaptively reacting with hand shaking in any direction.

In addition, according to another embodiment of the present disclosure, since the mutual magnetic forces generated between the magnets is minimized by arranging the neighboring magnets to have different polarities from each other, the OIS operation in the X-axis and Y-axis directions may be implemented more independently and accurately.

Further, according to another embodiment of the present disclosure, the OIS operation may be implemented more precisely by expanding the magnetic force region sensed by the sensor using a bipolar magnet as a sensing magnet.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing an overall configuration of an actuator to which a driving apparatus of the present disclosure is applied,
FIG. 2 is an exploded view showing a detailed configuration of the driving apparatus according to an embodiment of the present disclosure,
FIG. 3 is a diagram showing a support frame, a middle frame and relevant components according to an embodiment of the present disclosure,
FIG. 4 is a diagram showing a middle frame, a base frame and relevant components according to an embodiment of the present disclosure,
FIG. 5 is a diagram showing a driving apparatus according to another embodiment of the present disclosure,
FIG. 6 is a diagram for illustrating X-axial OIS of the present disclosure, implemented by rotating an optical-reflector.
FIG. 7 is a diagram for illustrating Y-axial OIS of the present disclosure, implemented by rotating an optical-reflector.
FIG. 8 is an exploded view showing a detailed configuration of the driving apparatus according to another embodiment of the present disclosure,
FIG. 9 is a diagram showing the coupling relationship of the support frame and the middle frame depicted in FIG. 8,
FIG. 10 is a diagram showing the coupling relationship of the middle frame and the base frame depicted in FIG. 8,
FIG. 11 is a diagram showing the principle of detecting a magnetic force of a magnet by a hall sensor according to the polarity arrangement of the magnets,
FIG. 12 is a diagram showing various examples of the magnets according to the present disclosure,
FIG. 13 is a diagram showing an OIS operation in the X-axis direction according to the present disclosure, implemented as the optical-reflector (the support frame) moves based on the middle frame, and
FIG. 14 is a diagram showing an OIS operation in the Y-axis direction according to the present disclosure, implemented as the optical-reflector (the middle frame) moves based on the base frame.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

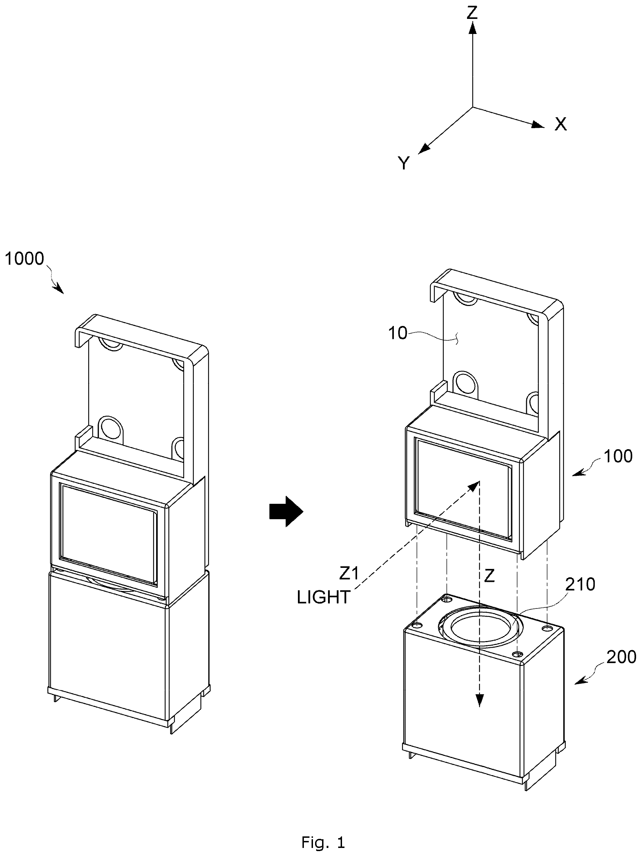

FIG. 1 is a diagram showing an overall configuration of an actuator 1000 to which an apparatus 100 for driving an optical-reflector for optical image stabilization (OIS) with a multi-axial structure according to the present disclosure (hereinafter, also referred to as a 'driving apparatus') is applied.

The actuator 1000 depicted FIG. 1 may include a driving apparatus 100 of the present disclosure, which moves an optical-reflector in both axial directions perpendicular to an optical axis to perform optical image stabilization (OIS), and a lens driving module 200 connected to the driving apparatus 100 and having a zoom lens 210 loaded thereon to implement auto focusing (AF) with respect to the zoom lens.

The driving apparatus 100 of the present disclosure may be implemented as a single device, or may also be implemented as a component of the actuator 1000 so as to be coupled to an upper portion or like of the lens driving unit 200, as shown in FIG. 1.

The lens 210 may be a single lens or a zoom lens including a plurality of lenses or lens groups or an optical member such as a prism, mirror or the like therein. If the lens 210 is a zoom lens or a zoom lens barrel, the lens 210 may be elongated in a vertical longitudinal direction (a Z-axis direction).

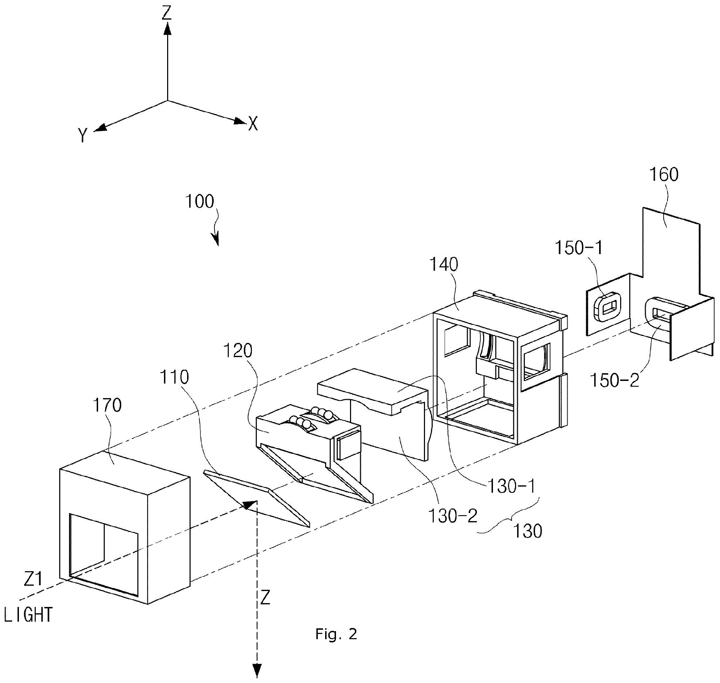

In the present disclosure, light of a subject or the like is not directly input to the lens 210, but the light is input to the lens 210 after its path is changed (refracted, reflected or the like) by an optical-reflector 110 (see FIG. 2) provided at the driving apparatus 100 of the present disclosure.

In FIG. 1, a path of light input from the external area is Z1, and a path of light formed by refracting or reflecting the path Z1 by means of the optical-reflector 110 and input to the lens 210 is Z. Hereinafter, Z will be called an optical axis or an optical axis direction.

In addition, though not shown in the figure, a photographing device such as CCD and CMOS for converting light signals into electric signals may be provided below the lens 210 on the basis of the optical axis direction, and a filter for passing or blocking light signals of specific frequency bands may also be provided together.

As explained later, in the present disclosure, the existing OIS method in which a lens is moved in two directions perpendicular to the optical axis Z, namely in an X-axis direction (a second direction) and a Y-axis direction (a first direction) is not used, but a technique for implementing OIS in a first direction and a second direction by using the optical-reflector 110, which changes a path of light, is used.

As shown in FIG. 1, the driving apparatus 100 of the present disclosure may further include a mounting space 10 at which an additional lens is mounted, and an additional lens or the like having an optical characteristic different from the lens 210 may be mounted at the lens mounting space 10. In some embodiments, the mounting space 10 may be not provided.

FIG. 2 is an exploded view showing a detailed configuration of the driving apparatus 100 according to an embodiment of the present disclosure. As shown in FIG. 2, the driving apparatus 100 of the present disclosure may include an optical-reflector 110, a support frame 120, a middle frame 130, a base frame 140, a first driving unit 150-1, a second driving unit 150-2, a circuit board 160 and a case 170.

First, referring to FIG. 2, overall configurations and relative relationship of the driving apparatus 100 of the present disclosure will be described, and detailed configuration of the driving apparatus 100 of the present disclosure and OIS operation in each direction will be described later.

As shown in FIG. 2, the light of an exterior subject is input into the driving apparatus 100 of the present disclosure through an opening formed in the case 170 via the path Z1, and the optical-reflector 110 of the present disclosure changes (refracts, reflects or the like) the path of the input light (to a Z-axial direction) so that the light is input to the lens 210.

The optical-reflector 110 for changing a path of light may be any one selected from a mirror and a prism, or a combination thereof, and may be implemented using various members capable of changing a path of light introduced form the external area to the optical axis direction. The mirror or prism may be made of glass material in order to improve optical performance.

As shown in FIG. 2, the driving apparatus 100 of the present disclosure may be configured so that the optical-reflector 110 refracts a path of light so that the light is input to the lens 210. Thus, the lens 210 may be installed in a length direction of a portable terminal, rather than a thickness direction thereof, which does not increase the thickness of the portable terminal and thus is optimized for a small and slim design of the portable terminal.

Based on the example depicted in FIG. 2, the optical-reflector 110 of the present disclosure is installed toward the opening of the case 170 through which light is introduced at the driving apparatus 100, namely in a front direction along the Y-axial direction.

In the following description, a vertical axial direction of the lens 210, namely a direction corresponding to a path of light input to the lens 210, is defined as an optical axis (Z axis), and two axes on a plane perpendicular to the optical axis (Z axis) are defined as X axis and Y axis.

As shown in FIG. 2 or the like, the optical-reflector 110 is disposed on the support frame 120 which physically supports the optical-reflector 110. A first magnet 121 is mounted to the support frame 120 of the present disclosure, and a first groove rail 123 for guiding rotation in an X-axial direction is formed therein. These configurations will be described in detail later.

The support frame 120 of the present disclosure for physically supporting the optical-reflector 110 is installed to be physically supported by the middle frame 130 in a state where the optical-reflector 110 is installed, as show in FIG. 2.

The support frame 120 of the present disclosure is installed to be capable of moving or rotating in an X-axial direction, which is one of two directions perpendicular to the optical axis on the basis of the middle frame 130, and as the support frame 120 moves or rotates, the optical-reflector 110 disposed on the support frame 120 physically moves together.

Meanwhile, the middle frame 130 of the present disclosure is configured to move or rotate in a Y-axial direction, which is perpendicular to the direction (X-axial direction) in which the support frame 120 rotates based on middle frame 130, among two directions perpendicular to the optical axis on the basis of the base frame 140.

For rotation (movement) of the middle frame 130, the middle frame 130 has a second magnet 135, and a second coil 150-2 for generating an electromagnetic force to the second magnet 135 is disposed on a circuit board 160 coupled to a side of the base frame 140, as illustrated in FIG. 2.

The first driving unit 150-1 of the present disclosure gives a driving force for moving the support frame 120 in an X-axial direction, and various examples may be applied thereto depending on embodiments. However, in consideration of power consumption, low noise, space utilization or the like, the first driving unit 150-1 may be implemented using a coil which uses an electromagnetic force as a driving force. If the first driving unit 150-1 is implemented using a first coil 150-1 as described above, a first magnet 121 for receiving the electromagnetic force generated by the first coil 150-1 is provided at the support frame 120 of the present disclosure.

In this point of view, the second driving unit 150-2 serving as a component for giving a driving force to move the middle frame 130 in a Y-axial direction may also be implemented using a second coil 150-2, and in this case, a second magnet 135 for receiving the electromagnetic force generated by the second coil 150-2 is provided at the middle frame 130 of the present disclosure.

In the following description, even though it is described that the first driving unit 150-1 is the first coil 150-1 for generating an electromagnetic force to the first magnet 121 and the second driving unit 150-2 is the second coil 150-2 for generating an electromagnetic force to the second magnet 135, this is just an example, and the first driving unit 150-1 and the second driving unit 150-2 are not limited to coils which generate an electromagnetic force by an applied power.

The first magnet 121 is installed at the support frame 120 so that the support frame 120 may move or rotate in an X-axial direction, and the first coil 150-1 for generating an electromagnetic force to the first magnet 121 is disposed on the circuit board 160 as shown in FIG. 2.

The optical-reflector 110 for changing a path of light introduced from the external area into a lens by means of the structure of the present disclosure depicted in FIG. 2 rotates in an X-axial direction as the support frame 120 rotates in the X-axial direction due to the electromagnetic force generated by the first magnet 121 and the first coil 150-1.

In addition, as the middle frame 130 rotates in a Y-axial direction due to the electromagnetic force generated by the second magnet 135 and the second coil 150-2, the support frame 120 loaded on the middle frame 130 rotates in the same direction, and accordingly the optical-reflector 110 of the present disclosure rotates in the Y-axial direction.

Since the support frame 120 of the present disclosure is configured to be independently rotatable on the basis of the middle frame 130, even though the middle frame 130 rotates in a Y-axial direction based on the base frame 140, the support frame 120 of the present disclosure may rotate in an X-axial direction independently as long as an electromagnetic force is generated at the first coil 150-1.

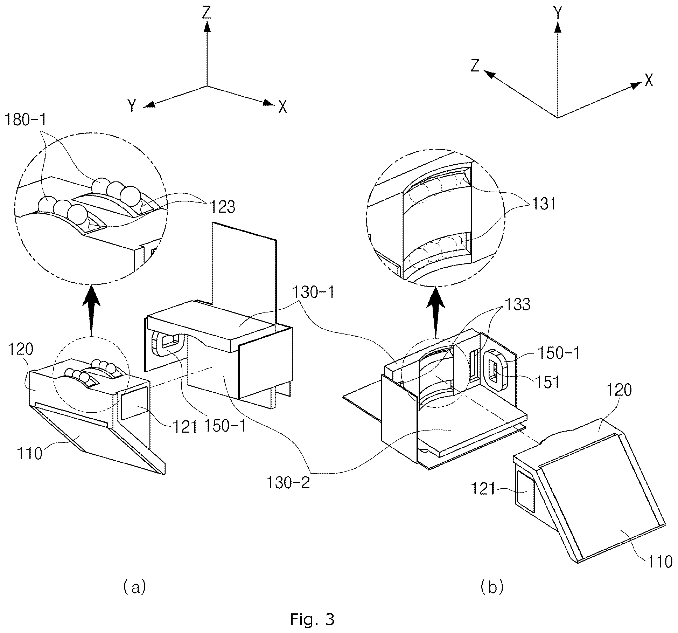

FIG. 3 is a diagram showing a support frame 120, a middle frame 130 and relevant components according to an embodiment of the present disclosure.

As described above, the support frame 120 of the present disclosure is configured to be movable or rotatable in an X-axial direction on the basis of the middle frame 130, and for this, a first groove rail 123 is provided at the support frame 120 as shown in FIG. 3 so that the support frame 120 is guided to rotate in an X-axial direction on the basis of the middle frame 130.

Since optical image stabilization is performed by moving the light of a subject, input to a photographing device, into a direction in which movement caused by hand shaking is compensated, the optical-reflector 110, namely the support frame 120 to which the optical-reflector 110 is coupled, may be configured to be rotatable.

For this, the first groove rail 123 formed at the support frame 120 is shaped to elongate in a length direction with a rounded shape as shown in the figures and also has an optimized curvature for rotation.

The middle frame 130 of the present disclosure, which accommodates the support frame 120 and physically supports rotation of the support frame 120, has a first guide rail 131 with a shape corresponding to the first groove rail 123, namely with a rounded shape, to elongate in a longitudinal direction at a location corresponding to the first groove rail 123 of the support frame 120 as shown in the figures.

The support frame 120 of the present disclosure rotates along a path corresponding to the first groove rail 123 with a rounded shape or the first guide rail 131 having a shape corresponding thereto.

In order to minimize shaking or separation of the support frame 120, the first groove rail 123 and the first guide rail 131 of the present disclosure may be arranged in two rows parallel to each other, and one of them may have a section with a V shape and the other may have a section with a U shape.

The middle frame 130 of the present disclosure may include a first plate 130-1 and a second plate 130-2 perpendicular to the first plate 130-1, and in this case, the first guide rail 131 is provided at the first plate 130-1 to face the first groove rail 123 of the support frame 120. As explained later, the second plate 130-2 may be arranged to guide that the middle frame 130 rotates based on the base frame 140.

As shown in FIG. 3, a plurality of first balls 180-1 are disposed between the first groove rail 123 and the second guide rail 141, and the support frame 120 and the middle frame 130 of the present disclosure may be kept in a separated state by means of the arrangement of the first balls 180-1, and the support frame 120 of the present disclosure may rotate in an X-axial direction based on the middle frame 130 with a minimized friction by the point-contact of the balls.

In some embodiments, the first balls 180-1 may be accommodated in the first groove rail 123 or the first guide rail 131 to a predetermined depth as shown in FIG. 3 in order to suitably reduce a separating distance between the support frame 120 and the middle frame 130.

The support frame 120 of the present disclosure has the first magnet 121, and the first magnet 121 receives an electromagnetic force by means of the first coil 150-1 disposed at the circuit board 160, and the support frame 120 of the present disclosure rotates based on the middle frame 130 by using the electromagnetic force as a driving force.

The circuit board 160 may include a first hall sensor 151 for detecting a location of a magnet (or, a moving body having the magnet) by means of a hall effect. If the first hall sensor 151 detects a location of a magnet, a driver (not shown) performs feed-back control so that a power of suitable intensity and direction corresponding to the location of the magnet is applied to the first coil 150-1.

The optical image stabilization function in the first direction (X-axial direction) may be precisely implemented by performing feed-back control to detect the accurate location of the optical-reflector 110 and apply a power accordingly. The driver (not shown) may be implemented independently from the first hall sensor 151 but may also be implemented in a single chip or module together with the first hall sensor.

In addition, the middle frame 130 of the present disclosure may include a first yoke 133 made of a metal material with magnetism at a location facing the first magnet 121. The first yoke 133 generates an attractive force to the first magnet 121 provided at the support frame 120 to pull the support frame 120 toward the middle frame 130. Due to the attractive force, the support frame 120 is continuously in point-contact with the first ball 180-1, and it may be effectively prevented that the support frame 120 is deviated outwards.

As shown in FIG. 3, the first magnet 121 may be respectively provided at right and left sides of the support frame 120 to be symmetric with each other based on a central portion of the support frame 120 so that the horizontal balance of the support frame 120 (based on FIG. 3) is maintained and also the driving force for OIS may be more precisely implemented by the first coil 150-1 and the first magnet 121. Also, two first yokes 133 as described above may also be respectively disposed to face the first magnets 121 at the right and left sides.

By this arrangement, when optical image stabilization in an X-axial direction is completed, the support frame 120, namely the optical-reflector 110, may return to its original location more rapidly and accurately on the basis of the middle frame 130.

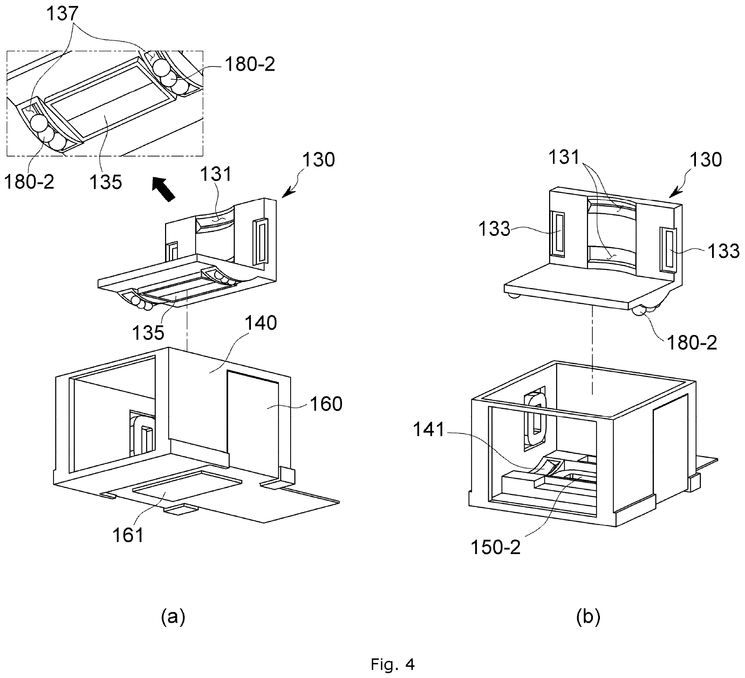

FIG. 4 is a diagram showing a middle frame 130, a base frame 140 and relevant components according to an embodiment of the present disclosure. Hereinafter, the structure of the present disclosure where the middle frame 130 rotates in a Y-axial direction based on the base frame 140 will be described in detail with reference to FIG. 4.

The middle frame 130 of the present disclosure is an object physically supporting rotation of the support frame 120 in an X-axial direction as described above, and simultaneously serves as a rotating body which directly rotates in a Y-axial direction based on the base frame 140.

As shown in FIG. 4, the middle frame 130 of the present disclosure includes a second magnet 135 which receives an electromagnetic force generated by the second coil 150-2, and a second groove rail 137 is formed in the middle frame 130 to guide rotation of the middle frame 130 in a Y-axial direction.

The base frame 140 of the present disclosure accommodates the middle frame 130 and physically supports rotation of the middle frame 130 in a Y-axial direction, and a second guide rail 141 having a shape corresponding to the second groove rail 137 is provided at the base frame 140 so that rotation of the middle frame 130 may be effectively guided.

The second coil 150-2 of the present disclosure generates an electromagnetic force to the second magnet 135 so that the middle frame 130 moves in a second direction (Y-axial direction) perpendicular to the first direction (X-axial direction), on the basis of the base frame 140, and by means of the electromagnetic force, the middle frame 130 of the present disclosure rotates in the second direction (Y-axial direction) based on the base frame 140.

As described above, the second groove rail 137 provided at the middle frame 130 and the second guide rail 141 provided at the base frame 140 are shaped corresponding to each other, namely to elongate in a Y-axial direction, and also configured to have a rounded shape or optimized curvatures corresponding to each other so that rotation of the middle frame 130 may be effectively supported.

By means of the above configuration of the second groove rail 137 and the second guide rail 141, the middle frame 130 of the present disclosure rotates along a path corresponding to the second groove rail 137 or the second guide rail 141.

A plurality of second balls 180-2 are disposed between the second groove rail 137 and the second guide rail 141 so that the middle frame 130 of the present disclosure may rotate in a Y-axial direction more flexibly and accurately.

By means of the second ball 180-2, the middle frame 130 of the present disclosure may move with a minimal friction and keep a suitable distance from the base frame 140.

A second yoke 161 for pulling the second magnet 135 of the middle frame 130 toward the base frame 140 may be provided so that the middle frame 130 is not separated from the base frame 140 but effectively maintains point-contact with the second ball 180-2 as described above.

As shown in FIG. 4 or the like, the second magnet 135 may be provided to a bottom surface (based on FIG. 4) of the second plate 130-2 where the first guide rail 131 is not provided at the middle frame 130, so that the middle frame 130 may support rotation of the support frame 120 and also simultaneously rotate based on the base frame 140, independently.

In this point of view, the first guide rail 131 provided at the middle frame 130 to guide rotation of the support frame 120 may be formed at an inner side (a central portion based on FIG. 4) of the first plate 130-1, and the second groove rail 137 provided at the middle frame 130 to guide rotation of the middle frame 130 based on the base frame 140 may be provided at an outer side (an outer portion based on FIG. 4) of the second plate 130-2, perpendicular to the first plate 130-1.

In addition, the first groove rail 123 provided at the support frame 120 and the second groove rail 137 provided at the middle frame 130 may be formed perpendicular to each other so that the movement of the support frame 120 in an X-axial direction and the movement of the middle frame 130 in a Y-axial direction may be implemented independently.

Meanwhile, in order to detect a location of the middle frame 130 in a Y-axial direction, a second hall sensor (not shown) for sensing a distance from the second magnet 135 may be provided at the circuit board 160.

The second hall sensor detects a location of the second magnet 135, or a location of the middle frame 130 or the optical-reflector 110 having the second magnet 135. Since the change in height is greater at an end portion of a rotating body in comparison so a center portion thereof, a magnet may be further provided at an end portion of the middle frame 130 so that the second hall sensor may detect a location of the magnet more effectively.

As described above, the optical-reflector 110 of the present disclosure reflects the input light to an optical axis (Z axis), and the base frame 140 of the present disclosure supports the optical-reflector 110 so that the optical-reflector 110 may move in two axial directions (X axis and Y axis) perpendicular to the optical axis.

As described above, the support frame 120 of the present disclosure is mounted on the base frame 140 to support the optical-reflector 110 and be movable in one axial direction, and the middle frame 130 of the present disclosure is located between the base frame 140 and the support frame 120 to support the optical-reflector 110 to be movable in a direction perpendicular to the moving direction of the support frame 120.

In the present disclosure, by means of the configuration where the middle frame 130 is disposed between the base frame 140 and the support frame 120 coupled to the optical-reflector 110, the support frame 120 and the middle frame 130 may move independently in directions perpendicular to each other, and thus the optical-reflector 110 may rotate (or, move) in X-axial and Y-axial directions perpendicular to the optical axis, thereby implementing optical image stabilization.

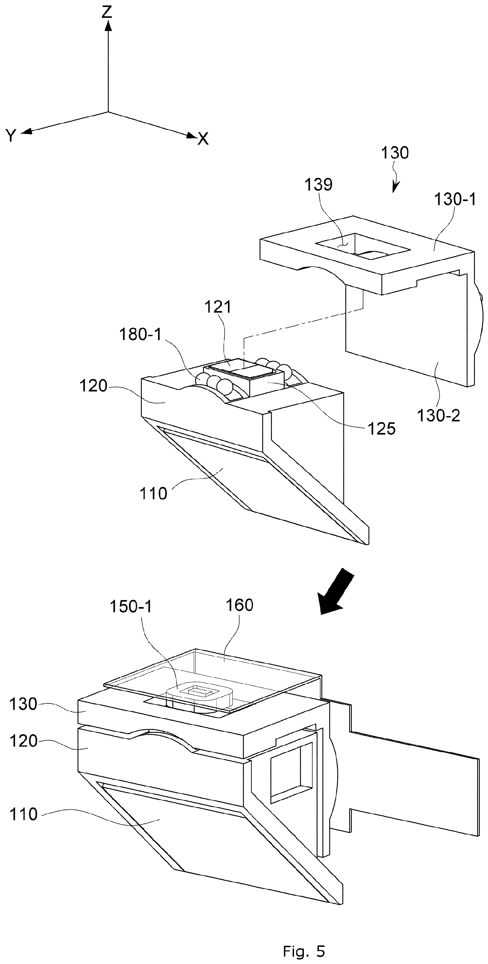

FIG. 5 is a diagram showing a driving apparatus 100 according to another embodiment of the present disclosure.

In the embodiment of the present disclosure depicted in FIG. 5, a distance between the first magnet 121 and the first coil 150-1 is reduced so that optical image stabilization in an X-axial direction may be performed in a low-power environment.

As described above, the support frame 120 of the present disclosure includes the first magnet 121 which receives an electromagnetic force in an X-axial direction from the first coil 150-1. Here, as shown in FIG. 5, the first magnet 121 may be disposed at a center between two first groove rails 123 spaced apart from each other in parallel. In order to improve a horizontal balance, the first magnet 121 may have a suitable width.

At this time, a mounting portion 125 may be formed at the support frame 120 so that the first magnet 121 is mounted thereto. As shown in the figure, the mounting portion 125 is shaped to protrude toward the middle frame 130. By means of the mounting portion 125, when the first magnet 121 is mounted to the support frame 120, the first magnet 121 may be located closer to the middle frame 130.

The middle frame 130 of the present disclosure has an opening 139 formed at a portion facing the first magnet 121, and the width of the opening 139 is slightly greater than the width of the mounting portion 125, namely the first magnet 121, in order to ensure a sufficient space for the rotation of the first magnet 121.

By using this configuration, the first magnet 121 of the present disclosure may be partially inserted into the opening 139 of the middle frame 130, and thus it is possible to suppress the support frame 120 not to be separated or shaken in any direction other than the X-axial direction in which the support frame 120 rotates based on the middle frame 130.

As shown in a lower portion of FIG. 5, the first magnet 121 is exposed through the opening 139 of the middle frame 130, and the first magnet 121 protrudes toward the middle frame 130 as much as a height of the mounting portion 125. For this reason, the electromagnetic force generated from the first coil 150-1 may be concentrated on the first magnet 121 more intensively, thereby allowing the support frame 120 to be driven in an X-axial direction in a lower-power environment.

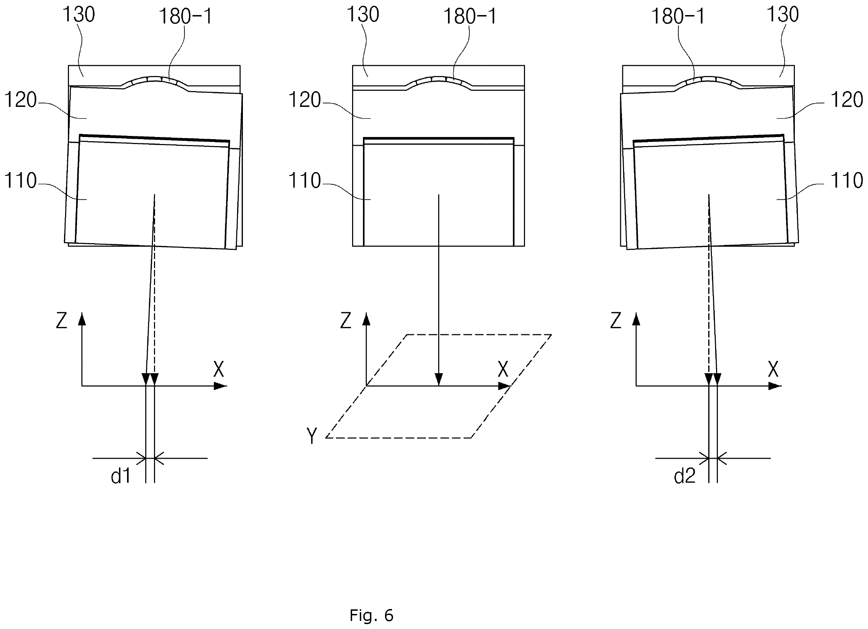

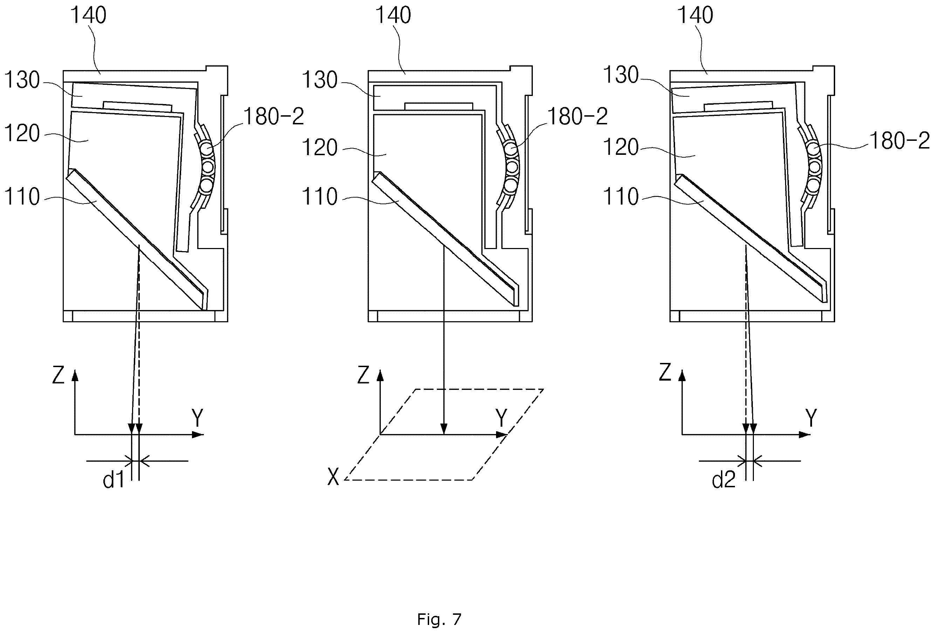

FIG. 6 is a diagram for illustrating X-axial OIS of the present disclosure, implemented by rotating the optical-reflector 110, and FIG. 7 is a diagram for illustrating Y-axial OIS of the present disclosure, implemented by rotating the optical-reflector 110 caused by the rotation of the middle frame 130.

First, referring to FIG. 6, a process of performing optical image stabilization in an X-axial direction according to the rotation of the optical-reflector 110 of the present disclosure, namely the rotation of the support frame 120 on which the optical-reflector 110 is disposed will be describe.

As described above, if a power of suitable intensity and direction is applied to the first coil 150-1, the first magnet receives an electromagnetic force, and by using the electromagnetic force, the support frame 120 at which the first magnet 121 is installed moves. The support frame 120 moves as being guided by the shape of the first groove rail 123 or the first guide rail 131, and thus the support frame 120 makes rotation.

A central portion of FIG. 6 depicts the optical-reflector 110, the support frame 120 and the middle frame 130, which are at original reference locations where optical image stabilization is not performed.

Light of an external area is input through the path Z1, and then its path is changed by the optical-reflector 110 of the present disclosure as shown in the central portion of FIG. 6, and then the light is input to the lens 210 in an optical axis direction (Z-axial direction).

If external shaking in an X-axial direction caused by hand shaking or the like is transferred, the driver (not shown) of the present disclosure performs feed-back control to the first hall sensor 151, which senses a location of the optical-reflector 110 (in detail, the first magnet 121 mounted to the support frame 120 or a magnet provided for sensing) so that a power of suitable intensity and direction for correcting a location in an X-axial direction is applied to the first coil 150-1.

If an electromagnetic force is generated between the first coil 150-1 and the first magnet 121 by means of the above feed-back control, the generated electromagnetic force is used as a driving force to rotate the support frame 120, or the optical-reflector 110 mounted to the support frame 120, to correct movement caused by hand shaking.

If the electromagnetic force generated at the first coil 150-1 rotates the support frame 120 mounted at the optical-reflector 110 in a clockwise direction as shown in a left portion of FIG. 6, the input light causes a displacement d1 in a left direction by means of the rotation of the optical-reflector 110, and thus in view of a lens or a photographing device such as CCD, correction is made in an X-axial direction (a left direction, based on FIG. 6).

In this point of view, if the generated at the first coil 150-1 rotates the optical-reflector 110 in a counterclockwise direction as shown in a right portion of FIG. 6, the input light causes a displacement d2 in a right direction, and thus in view of a lens or a photographing device such as CCD, correction is made in an X-axial direction (a right direction, based on FIG. 6).

As described above, in the present disclosure, optical image stabilization is performed in a specific direction by rotating the optical-reflector 110, and further the rotation of the optical-reflector 110 is physically supported and guided by the first groove rail 123, the first guide rail 131 and the first ball 180-1 with curvatures to ensure more precise driving control and also allow operation with a minimized power.

FIG. 7 depicts that optical image stabilization is performed in a Y-axial direction by rotating the middle frame 130 based on the base frame 140 so that the support frame 120 accommodated in the middle frame 130 rotates and also the optical-reflector 110 mounted to the support frame 120 rotates.

A central portion of FIG. 7 depicts a reference state where optical image stabilization in a Y-axial direction is not performed.

If an electromagnetic force generated at the second coil 150-2 rotates the middle frame 130 in a clockwise direction as shown in a left portion of FIG. 7, the optical-reflector 110 also rotates in the same direction accordingly, and so the input light makes a displacement d1 in a left direction. Thus, in view of a lens or a photographing device such as CCD, correction is made in the Y-axial direction (a left direction based on FIG. 7).

In this point of view, if an electromagnetic force generated at the second coil 150-2 rotates the middle frame 130 in a counterclockwise direction as shown in a right portion of FIG. 7, the input light makes a displacement d2 in a right direction, and so, in view of a lens or a photographing device such as CCD, correction is made in a Y-axial direction (a right direction based on FIG. 7).

Hereinafter, a driving apparatus 100 according to another embodiment of the present disclosure will be described in detail.

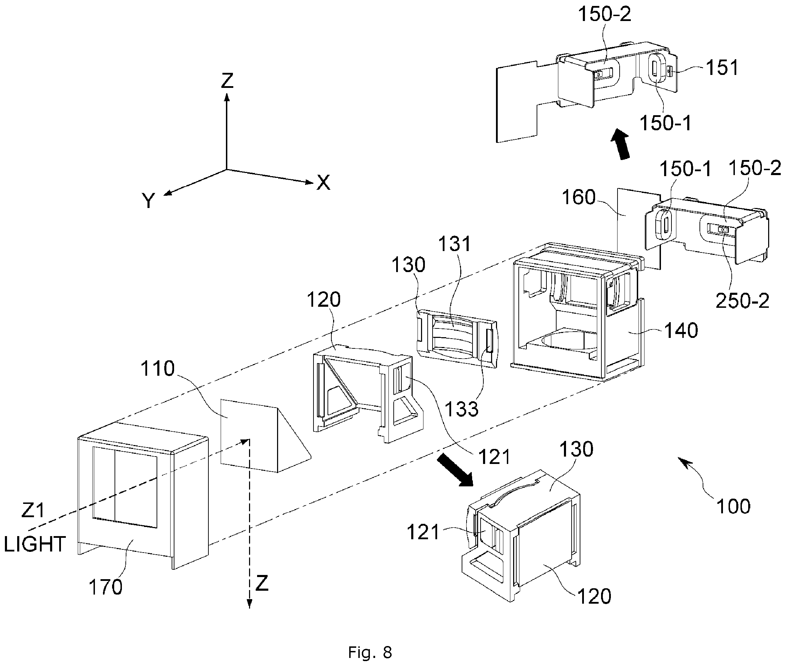

FIG. 8 is an exploded view showing a detailed configuration of the driving apparatus 100 according to another embodiment of the present disclosure. As shown in FIG. 8, the driving apparatus 100 of the present disclosure may include an optical-reflector 110, a support frame 120, a middle frame 130, a base frame 140, a first magnet 121, a first guide rail 131, a first yoke 133, a circuit board 160, a first coil 150-1, a second coil 150-2 and a case 170.

First, referring to FIG. 8, overall configurations and relative relationship of the driving apparatus 100 of the present disclosure will be described, and detailed configuration of the driving apparatus 100 of the present disclosure and OIS operation in each direction will be described later.

As shown in FIG. 8 or the like, the optical-reflector 110 is disposed on the support frame 120 which physically supports the optical-reflector 110. A first magnet 121 is mounted to the support frame 120 of the present disclosure, and a first groove rail 123 for guiding rotation in an X-axial direction is formed therein. These configurations will be described in detail later.

The support frame 120 of the present disclosure for physically supporting the optical-reflector 110 is installed to be physically supported by the middle frame 130 in a state where the optical-reflector 110 is installed, as show in FIG. 8.

The support frame 120 of the present disclosure is installed to be capable of moving or rotating in an X-axial direction, which is one of two directions perpendicular to the optical axis on the basis of the middle frame 130, and as the support frame 120 moves or rotates, the optical-reflector 110 disposed on the support frame 120 physically moves together.

Meanwhile, the middle frame 130 of the present disclosure is configured to move or rotate in a Y-axial direction, which is perpendicular to the direction (X-axial direction) in which the support frame 120 rotates based on middle frame 130, among two directions perpendicular to the optical axis on the basis of the base frame 140.

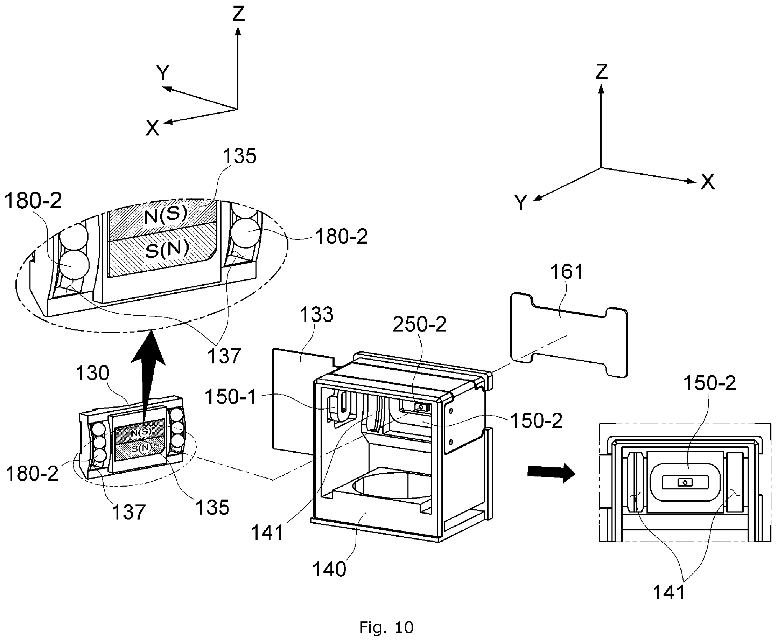

For rotation of the middle frame 130, the middle frame 130 has a second magnet 135 (see FIG. 10), and a second coil 150-2 for generating an electromagnetic force to the second magnet 135 is disposed on a circuit board 160 coupled to a side of the base frame 140, as illustrated in FIG. 8.

The first coil 150-1 of the present disclosure gives a driving force for moving the support frame 120 in an X-axial direction based on the middle frame 130, and various examples may be applied to give a driving force to the support frame 120 depending on embodiments. However, in consideration of power consumption, low noise, space utilization or the like, a coil using an electromagnetic force as a driving force may be applied as illustrated in the figure.

If the first coil 150-1 is used as a driving source for moving the support frame 120 in the X-axis direction as described above, a first magnet 121 for receiving the electromagnetic force generated by the first coil 150-1 is provided at the support frame 120 of the present disclosure.

For more effective movement of the support frame 120 in the X-axis direction, as shown in the figures, the first magnet 121 may be provided to both sides of the support frame 120, respectively, and the first coil 150-1 may also be provided in plural to face the support frames 120, respectively. In an embodiment, the first magnet 121 and the first coil 150-1 may also be provided at only one surface.

In a corresponding viewpoint, the second coil 150-2 serves as a component for giving a driving force to move the middle frame 130 in a Y-axial direction based on the base frame 140, and in this case, a second magnet 135 for receiving the electromagnetic force generated by the second coil 150-2 is provided at the middle frame 130 of the present disclosure.

As described above, the first magnet 121 is installed at the support frame 120 so that the support frame 120 may move or rotate in an X-axial direction, and the first coil 150-1 for generating an electromagnetic force to the first magnet 121 may be disposed on the circuit board 160 coupled to the base frame 140 as shown in FIG. 8.

The optical-reflector 110 for changing a path of light introduced from the external area into a lens by means of the structure of the present disclosure depicted in FIG. 8 rotates in an X-axial direction as the support frame 120 rotates in the X-axial direction due to the electromagnetic force generated by the first magnet 121 and the first coil 150-1.

In addition, as the middle frame 130 rotates in a Y-axial direction due to the electromagnetic force generated by the second magnet 135 and the second coil 150-2, the support frame 120 loaded on the middle frame 130 rotates in the same direction, and accordingly the optical-reflector 110 of the present disclosure rotates in the Y-axial direction.

Since the support frame 120 of the present disclosure is configured to be independently rotatable on the basis of the middle frame 130, even though the middle frame 130 rotates in a Y-axial direction based on the base frame 140, the support frame 120 of the present disclosure may rotate in an X-axial direction independently as long as an electromagnetic force is generated at the first coil 150-1.

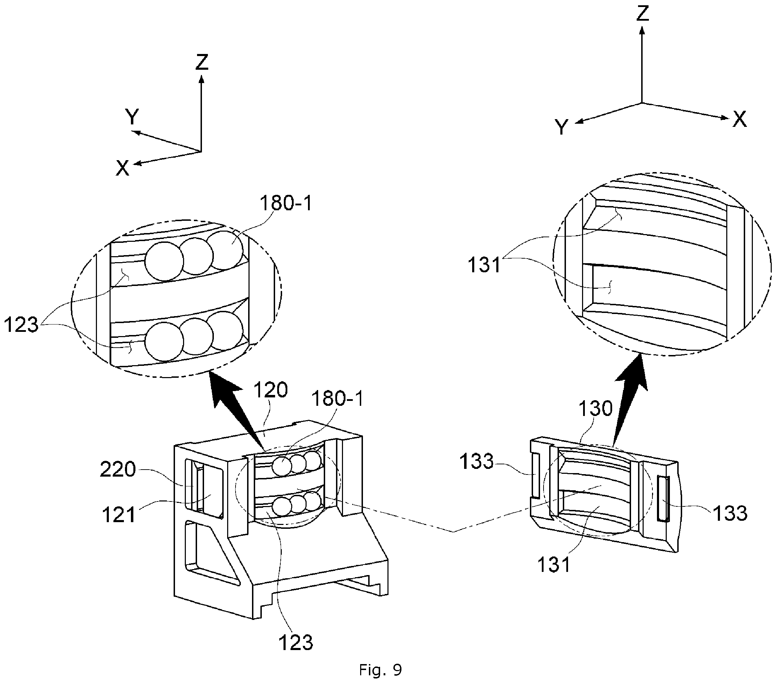

Hereinafter, the operation of the support frame 120 according to the present disclosure, which moves or rotates based on the middle frame 130 will be described in detail with reference to FIG. 9.

As described above, the support frame 120 of the present disclosure is configured to be movable or rotatable in an X-axial direction on the basis of the middle frame 130, and for this, a first groove rail 123 is provided at the support frame 120 as shown in FIG. 9 so that the support frame 120 is guided to rotate in an X-axial direction on the basis of the middle frame 130.

Since optical image stabilization is performed by moving the light of a subject, input to a photographing device, into a direction in which movement caused by hand shaking is compensated, the optical-reflector 110, namely the support frame 120 to which the optical-reflector 110 is coupled, may be configured to be rotatable so that the light of the subject input along the optical axis (in the Z-axis direction) is moved based on the photographing device.

For this, the first groove rail 123 formed at the support frame 120 is shaped to elongate in a length direction (in the X-axis direction) with a rounded shape as shown in the figures and also has an optimized curvature for rotation.

The middle frame 130 of the present disclosure, which accommodates the support frame 120 and physically supports rotation of the support frame 120, has a first guide rail 131 with a shape corresponding to the first groove rail 123, namely with a rounded shape, to elongate in a longitudinal direction at a location corresponding to the first groove rail 123 of the support frame 120 as shown in the figures.

The support frame 120 of the present disclosure rotates along a path corresponding to the first groove rail 123 with a rounded shape or the first guide rail 131 having a shape corresponding thereto.

In an embodiment, if the middle frame 130 is disposed at an upper portion of the support frame 120 or implemented to have a frame structure bent vertically, the first groove rail 123 may be provided on the support frame 120.

In order to minimize shaking or separation of the support frame 120, the first groove rail 123 and the first guide rail 131 of the present disclosure may be arranged in two rows parallel to each other, and one of them may have a section with a V shape and the other may have a section with a U shape or the like.

As shown in FIG. 9, a plurality of first balls 180-1 are disposed between the first groove rail 123 and the first guide rail 131, and the support frame 120 and the middle frame 130 of the present disclosure may be kept in a separated state by means of the arrangement of the first balls 180-1, and the support frame 120 of the present disclosure may rotate in an X-axial direction based on the middle frame 130 with a minimized friction by the point-contact of the balls.

In some embodiments, the first balls 180-1 may be accommodated in the first groove rail 123 or the first guide rail 131 to a predetermined level as shown in FIG. 9 in order to suitably reduce a separating distance between the support frame 120 and the middle frame 130.

The support frame 120 of the present disclosure has the first magnet 121, and the first magnet 121 receives an electromagnetic force by means of the first coil 150-1 disposed at the circuit board 160, and the support frame 120 of the present disclosure rotates based on the middle frame 130 by using the electromagnetic force as a driving force.

The circuit board 160 may include a first hall sensor 151 (see FIG. 8) for detecting a location of a first magnet 121 (or, an optical-reflector loaded on the support frame 120 having the first magnet 121) by means of a hall effect. If the first hall sensor 151 detects a location of the first magnet 121, a driver (not shown) performs feed-back control so that a power of suitable intensity and direction corresponding to the location of the first magnet 121 is applied to the first coil 150-1. As described later, a second hall sensor 250-2 (see FIG. 8) for detecting a location of a second magnet 135 is also provided similarly.

The optical image stabilization function in the first direction (X-axial direction) may be precisely implemented by performing feed-back control to detect the accurate location of the optical-reflector 110 and apply a power accordingly. The driver (not shown) may be implemented independently from the hall sensor 151, 250-2 but may also be implemented in a single chip or module together with the hall sensor 151, 250-2.

Meanwhile, the middle frame 130 of the present disclosure may include a first yoke 133 made of a metal material with magnetism at a location facing the first magnet 121. The first yoke 133 generates an attractive force to the first magnet 121 provided at the support frame 120 to pull the support frame 120 toward the middle frame 130. Due to the attractive force, the support frame 120 is continuously in point-contact with the first ball 180-1, and it may be effectively prevented that the support frame 120 is deviated outwards.

As shown in FIG. 9, the first magnet 121 may be respectively provided at right and left sides of the support frame 120 to be symmetric with each other based on a central portion of the support frame 120 so that the horizontal balance (based on FIG. 9) of the support frame 120 is maintained and also the driving force for OIS may be more precisely implemented by the first coil 150-1 and the first magnet 121.

In addition, two first yokes 133 as described above may be respectively disposed to face the first magnets 121 at the right and left sides so that the support frame 120, namely the optical-reflector 110, may return to its original location more rapidly and accurately on the basis of the middle frame 130 when optical image stabilization in an X-axial direction is completed.

FIG. 10 is a diagram showing a middle frame 130, a base frame 140 and relevant components according to an embodiment of the present disclosure. Hereinafter, the structure of the present disclosure where the middle frame 130 rotates in a Y-axial direction based on the base frame 140 will be described in detail with reference to FIG. 10.

The middle frame 130 of the present disclosure is an object physically supporting rotation of the support frame 120 in an X-axial direction as described above, and simultaneously serves as a rotating body which directly rotates in a Y-axial direction based on the base frame 140.

As shown in FIG. 10, the middle frame 130 of the present disclosure includes a second magnet 135 which receives an electromagnetic force generated by the second coil 150-2, and a second groove rail 137 is formed in the middle frame 130 to guide rotation of the middle frame 130 in a Y-axial direction.

The base frame 140 of the present disclosure accommodates the middle frame 130 and physically supports rotation of the middle frame 130 in a Y-axial direction, and a second guide rail 141 having a shape corresponding to the second groove rail 137 is provided at the base frame 140 so that rotation of the middle frame 130 may be effectively guided.

The second coil 150-2 of the present disclosure generates an electromagnetic force to the second magnet 135 so that the middle frame 130 moves in a second direction (Y-axial direction) perpendicular to the first direction (X-axial direction), on the basis of the base frame 140, and by means of the electromagnetic force, the middle frame 130 of the present disclosure rotates in the second direction (Y-axial direction) based on the base frame 140.

As described above, the second groove rail 137 provided at the middle frame 130 and the second guide rail 141 provided at the base frame 140 are shaped corresponding to each other, namely to elongate in a Y-axial direction, and also configured to have a rounded shape or a curvature optimized and corresponding to each other so that rotation of the middle frame 130 may be effectively supported.

By means of the above configuration of the second groove rail 137 and the second guide rail 141, the middle frame 130 of the present disclosure rotates along a path corresponding to the second groove rail 137 or the second guide rail 141.

A plurality of second balls 180-2 are disposed between the second groove rail 137 and the second guide rail 141 so that the middle frame 130 of the present disclosure may rotate in a Y-axial direction more flexibly and accurately.

By means of the second ball 180-2, the middle frame 130 of the present disclosure may move with a minimal friction and keep a suitable distance from the base frame 140.

Similar to the first yoke 133 described above, a second yoke 161 for pulling the second magnet 135 of the middle frame 130 toward the base frame 140 may be provided so that the middle frame 130 is not separated from the base frame 140 but effectively maintains point-contact with the second ball 180-2 as described above.

As shown in FIG. 10 or the like, the second magnet 135 may be provided to a surface of the middle frame 130 where the first guide rail 131 is not provided, so that the middle frame 130 may support rotation of the support frame 120 and also simultaneously rotate based on the base frame 140, independently.

In a corresponding viewpoint, the second groove rail 137 for guiding the middle frame 130 to rotate based on the base frame 140 may also be provided at a surface where the first guide rail 131 is not provided. In other words, as shown in the figures, the first guide rail 131 may be formed at an inner side of the middle frame 130, and the second groove rail 137 may be formed at an outer side surface where the first guide rail 131 is not provided.

In addition, the first groove rail 123 provided at the support frame 120 and the second groove rail 137 provided at the middle frame 130 may be formed perpendicular to each other so that the movement of the support frame 120 in an X-axial direction and the movement of the middle frame 130 in a Y-axial direction may be implemented independently.

Meanwhile, in order to detect a location of the middle frame 130 in a Y-axial direction, a second hall sensor 250-2 for sensing a location of the second magnet 135 may be provided at the circuit board 160.

The second hall sensor 250-2 detects a location of the second magnet 135, or a location of the middle frame 130 or the optical-reflector 110 having the second magnet 135.

Since the change in height (or, location) is greater at an end portion of a rotating body in comparison so a center portion thereof, in some embodiments, the second hall sensor 250-2 may be configured to detect a location of the end portion of the middle frame 130 so as to more effectively detect the location of the middle frame 130, or the optical-reflector 110 provided at the middle frame 130.

For this, a sub magnet 230 may be provided at an end portion of the middle frame 130, namely at a location spaced apart from the second magnet 135, and the second hall sensor 250-2 may be configured to detect the location of the second sub magnet 230.

Hereinafter, for better understanding and convenient explanation, the sub magnet will be distinguishably explained as a first sub magnet 220 and a second sub magnet 230, depending on the object at which the sub magnet is provided. Namely, the sub magnet provided at the support frame 120 will be called the first sub magnet 220, and the sub magnet provided at the middle frame 130 will be called the second sub magnet 230.

As described above, the optical-reflector 110 of the present disclosure reflects the input light to an optical axis (Z axis), and the base frame 140 of the present disclosure supports the optical-reflector 110 so that the optical-reflector 110 may move in two axial directions (X axis and Y axis) perpendicular to the optical axis.

As described above, the support frame 120 of the present disclosure is mounted on the base frame 140 to support the optical-reflector 110 and be movable in one axial direction, and the middle frame 130 of the present disclosure is located between the base frame 140 and the support frame 120 to support the optical-reflector 110 to be movable in a direction perpendicular to the moving direction of the support frame 120.

In the present disclosure, by means of the configuration where the middle frame 130 is disposed between the base frame 140 and the support frame 120 coupled to the optical-reflector 110, the support frame 120 and the middle frame 130 may move independently in directions perpendicular to each other, and thus the optical-reflector 110 may rotate in X-axial and Y-axial directions perpendicular to the optical axis, thereby implementing optical image stabilization.

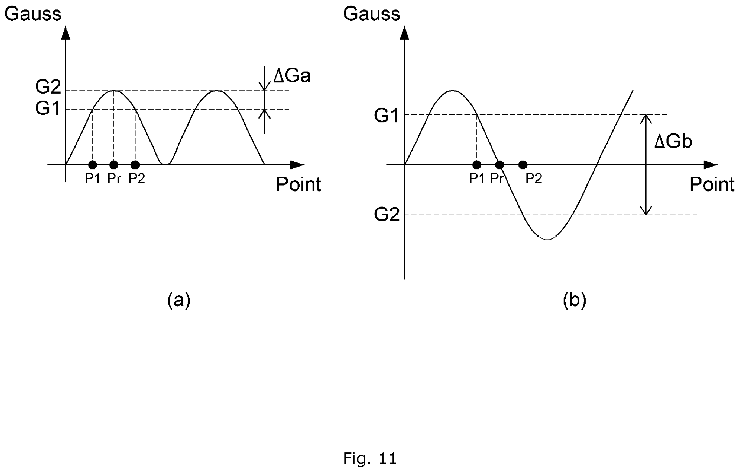

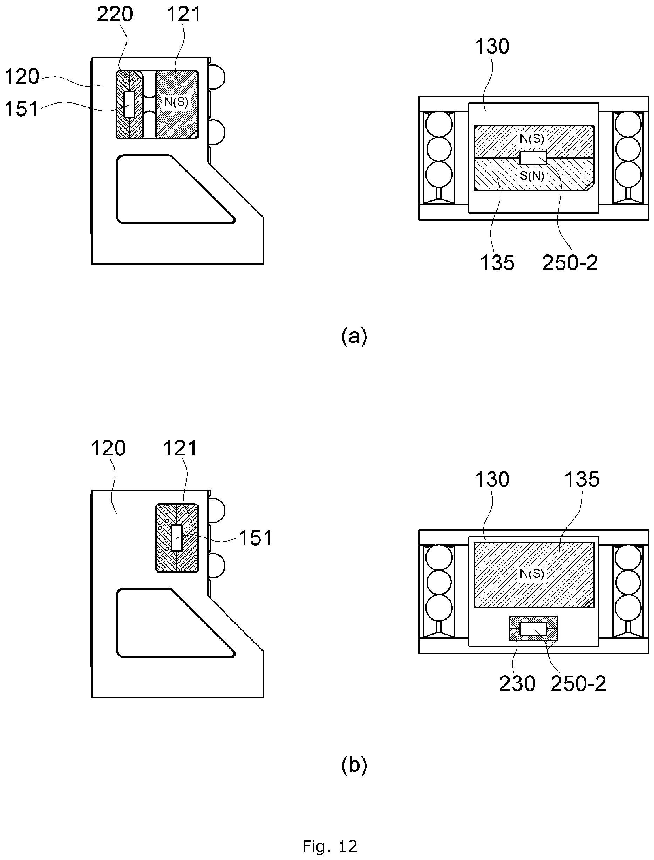

Hereinafter, the magnet (the first magnet 121 and the second magnet 135), the sensing magnet (the first sub magnet 220 and the second sub magnet 230) and the hall sensor (the first hall sensor 151 and the second hall sensor 250-2 according to various embodiments of the present disclosure will be described in detail with reference to FIG. 12. First, the principle that the hall sensor senses the location of a magnet will be briefly described according to the polarity arrangement of the magnet with reference to FIG. 11.

A portion (a) of FIG. 11 is a graph showing a range of magnetic force sensed by the hall sensor when a single-pole magnetized magnet is used as a magnet sensed by the hall sensor, and a portion (b) of FIG. 11 is a graph showing a range of magnetic force range sensed by the hall sensor when a dual-pole magnetized magnet is used as a magnet sensed by the hall sensor.

In the following description, when the magnetic pole surface of a magnet exposed to the hall sensor, namely the magnetic pole surface of the magnet facing the hall sensor, has one pole (an N pole or an S pole), the magnet is called a single-pole magnetized magnet. Also, when the magnetic pole surface of a magnet exposed to a hall sensor, namely the magnetic pole surface of the magnet facing the hall sensor, has a plurality of poles, the magnet is called a multi-pole magnetized magnet.

Namely, the multi-pole magnetized magnet means a magnet at which both the N pole and the S pole are arranged to face the hall sensor. In an embodiment, the multi-pole magnetized magnet includes a magnet at which two or more N poles and two or more S poles are arranged to face the hall sensor.

As explained later, based on a coil that generates an electromagnetic force to a magnet, a magnet having a single polarity at the surface facing the coil corresponds to the single-pole magnetized magnet described above, and a magnet having a plurality of poles at the surface facing the coil corresponds to the multi-pole magnetized magnet described above.

In the portions (a) and (b) of FIG. 11, Pr denotes a distance between the hall sensor and the magnet at default location having no magnet movement. Normally, the default location is set when the distance between the magnet and the hall sensor is shortest. In the case of the single-pole magnetized magnet, the largest magnetic force is sensed at the default location. In the case of the dual-pole magnetized magnet, the magnetic force at the default location is sensed as "0" due to the directions of the magnetic forces.

If a moving body having a magnet moves from a positive direction P2 to a negative direction P1 based on the default location Pr, the change amount of magnetic force recognized by the hall sensor becomes ΔG(|G2-G1|). In this case, as shown in the portion (a) of FIG. 11, if the dual-pole (multiple-pole) magnetized magnet is sensed by the hall sensor, the change amount of magnetic force sensed by the hall sensor becomes ΔGa. Also, as shown in the portion (b) of FIG. 11, if the single-pole magnetized magnet is sensed by the hall sensor, the change amount of magnetic force sensed by the hall sensor becomes AGb.

If the hall sensor senses the change of magnetic force from the multiple-pole magnetized magnet as described above, the change amount (Ga<Gb) of magnetic force is sensed as being much greater, compared to the single-pole magnetized magnet, even though the magnet moves by the same distance (|P1-P2|).

In addition, if the hall sensor senses the change of magnetic force from the multiple-pole magnetized magnet, it is possible to sense a positive magnetic force and a negative magnetic force simultaneously, based on the magnetic force "0".

If the magnet sensed the hall sensor is the dual-pole (multiple-pole) magnetized magnet as described above, the magnetic force region sensed by the hall sensor is further enlarged. Since the enlarged region may be used for magnetic force sensing, the resolving power of the hall sensor is enhanced, and the directionality (positive direction and negative direction) of the magnetic force may be effectively reflected in sensing the location, thereby realizing the OIS operation more precisely.

In the embodiment depicted in FIG. 12, the multi-pole magnetized magnet may be utilized more effectively as described above, and a magnetic field interference force that may be generated between magnets may be minimized.

As described above, the support frame 120 of the present disclosure includes the first magnet 121 for generating a driving force for rotational movement in the X-axis direction, and the second magnet 135 for generating a driving force for rotational movement in the Y-axis direction.

As explained later, one of the first magnet 121 and the second magnet 135 may have a single polarity and the other one may have two or more polarities so that the influence applied between the magnets is reduced to allow independent movement in each axial direction.

Based on the coil that generates an electromagnetic force to the magnet, one of the first magnet 121 and the second magnet 135 has a single polarity at the surface facing the corresponding coil, and the other has two or more polarities at the surface facing the corresponding coil.

Specifically, in an embodiment, as shown in the portion (a) of FIG. 12, the first magnet 121 is configured so that its surface facing the first coil 150-1 has a single polarity, and the second magnet 135 is configured so that its surface facing the second coil 150-2 has two or more polarities.

In this case, the first hall sensor 151 may be configured to detect the location of the first magnet 121 provided at the support frame 120. However, since the efficiency of location sensing is low in the case of a single-pole magnetized magnet (with a single polarity), as shown in the portion (a) of FIG. 12, the first sub magnet 220 having two or more polarities at the surface facing the first hall sensor 151 is provided at the support frame 120 to be spaced apart from the first magnet 121, and first hall sensor 151may be configured to sense the location of the first sub magnet 220.

In a corresponding viewpoint, the middle frame 130 may additionally include a sensing magnet only for location sensing. However, since the second magnet 135 is implemented as a multi-pole (dual-pole) magnetized magnet, the second hall sensor 250-2 may be configured to sense the location of the second magnet 135.

However, even in this case, in order to sufficiently utilize that the moving range of an end is larger, the sensing magnet (the second sub magnet 230) having two or more polarities may be provided at the end of the middle frame 130 to be spaced apart from the second magnet 135, and the second hall sensor 250-2 may be configured to detect the location of the second sub magnet 230.

In an embodiment, as shown in the portion (b) of FIG. 12, the first magnet 121 may have two or more polarities at the surface facing at least one first coil 150-1, and the second magnet 135 may be configured so that its surface facing the second coil 150-2 has a single polarity, contrary to the above.

In this case, the second hall sensor 250-2 may be configured to detect the location of the second magnet 135 provided at the middle frame 130. However, since the single-pole magnetized magnet has low efficiency in location sensing as described above, as shown in the portion (b) of FIG. 12, the second sub magnet 230 having two or more polarities at the surface facing the second hall sensor 250-2 may be disposed at the end of the middle frame 130 to be spaced apart from the second magnet 135, and the second hall sensor 250-2 may be configured to detect the location of the second sub magnet 230.

In a corresponding viewpoint, the support frame 120 may additionally include a sensing magnet only for position sensing. However, since the first magnet 121 is implemented to have multiple poles (two poles), the first hall sensor 151 may be configured to detect the location of the first magnet 121.

However, even in this case, in order to sufficiently utilize that the moving range of an end is larger, the sensing magnet (the first sub magnet 220) having two or more polarities may be provided at the end of the support frame 120 to be spaced apart from the first magnet 121, and the first hall sensor 151 may be configured to sense the location of the first sub magnet 220.

If a plurality of magnets are arranged to have different polarities as described above, the influence of the magnetic field generated by each magnet on the other magnet may be reduced, compared to the case where the magnets are arranged to have the same polarity. Thus, it is possible to more independently and precisely control the movement or rotation of each magnet in each direction.

Further, since a plurality of magnets are arranged to have different polarities and simultaneously a moving body having a single-pole magnetized magnet additionally includes a sensing magnet having two or more polarities, the movement or rotation of each magnet may be implemented more independently and precisely, and also the OIS operation may be implemented more precisely by accurate location sensing of the hall sensor.

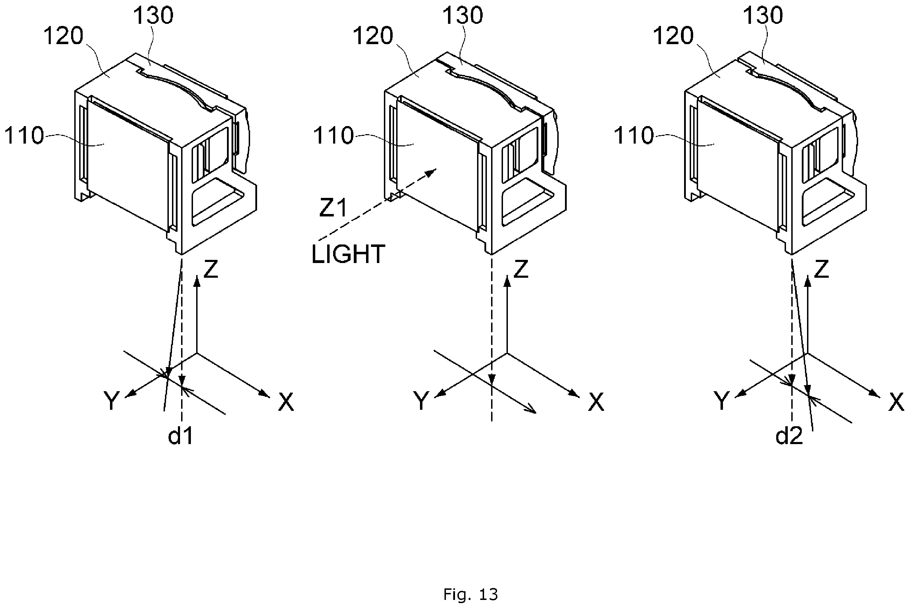

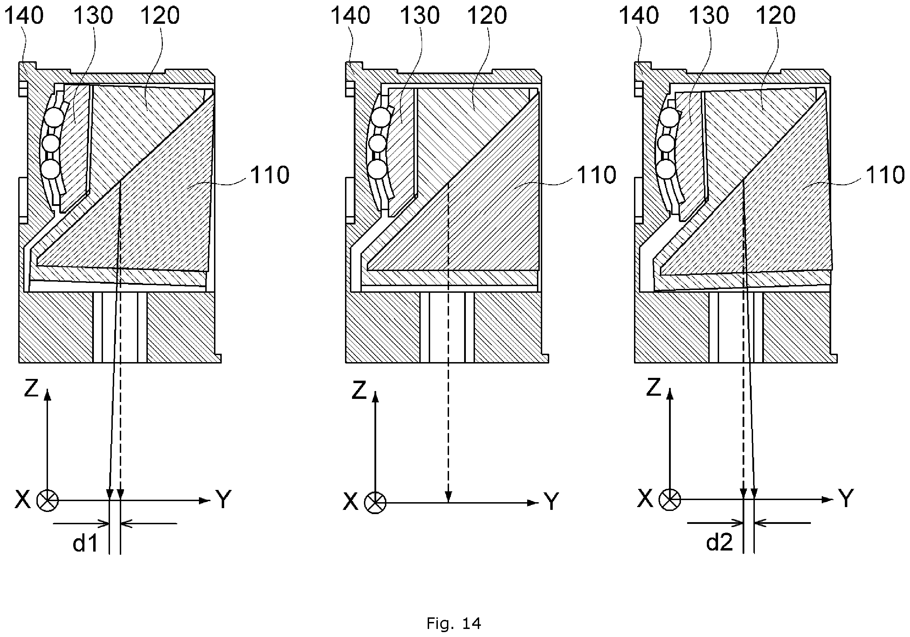

FIG. 13 is a diagram for illustrating X-axial OIS of the present disclosure, implemented by rotating the optical-reflector 110, and FIG. 14 is a diagram for illustrating Y-axial OIS of the present disclosure, implemented by the rotation of the middle frame 130.

First, referring to FIG. 13, a process of performing optical image stabilization in an X-axial direction according to the rotation of the optical-reflector 110 of the present disclosure, namely the rotation of the support frame 120 on which the optical-reflector 110 is disposed will be describe.

As described above, if a power of suitable intensity and direction is applied to the first coil 150-1, the first magnet 121 receives an electromagnetic force, and by using the electromagnetic force, the support frame 120 at which the first magnet 121 is installed moves. The support frame 120 moves as being guided by the shape of the first groove rail 123 or the first guide rail 131, and thus the support frame 120 makes rotation.

A central portion of FIG. 13 depicts the optical-reflector 110, the support frame 120 and the middle frame 130, which are at reference locations where optical image stabilization is not performed.

Light of an external area is input through the path Z1, and then its path is changed by the optical-reflector 110 of the present disclosure as shown in the central portion of FIG. 13, and then the light is input to the lens 210 in an optical axis direction (Z-axial direction).

If external shaking in an X-axial direction caused by hand shaking or the like is transferred, the driver (not shown) of the present disclosure performs feed-back control to the hall sensor 151, which senses a location of the optical-reflector 110 (in detail, the first magnet 121 mounted to the support frame 120 or the first sub magnet 220) so that a power of suitable intensity and direction for correcting a location in an X-axial direction is applied to the first coil 150-1.

If an electromagnetic force is generated between the first coil 150-1 and the first magnet 121 by means of the above feed-back control, the generated electromagnetic force is used as a driving force to rotate the support frame 120, or the optical-reflector 110 mounted to the support frame 120, to correct movement caused by hand shaking.

If the electromagnetic force generated at the first coil 150-1 rotates the support frame 120 mounted at the optical-reflector 110 in a clockwise direction as shown in a left portion of FIG. 13, the input light causes a displacement d1 in a left direction by means of the rotation of the optical-reflector 110, and thus in view of a lens or a photographing device such as CCD, correction is made in an X-axial direction (a left direction of the X axis, based on FIG. 13).

In a corresponding viewpoint, if the generated at the first coil 150-1 rotates the optical-reflector 110 in a counterclockwise direction as shown in a right portion of FIG. 13, the input light causes a displacement d2 in a right direction, and thus in view of a lens or a photographing device such as CCD, correction is made in an X-axial direction (a right direction of the X axis, based on FIG. 6).

As described above, in the present disclosure, optical image stabilization is performed in a specific direction by rotating the optical-reflector 110, and further the rotation of the optical-reflector 110 is physically supported and guided by the first groove rail 123, the first guide rail 131 and the first ball 180-1 with curvatures to ensure more precise driving control and also allow operation with a minimized power.

FIG. 14 depicts that optical image stabilization is performed in a Y-axial direction by rotating the middle frame 130 based on the base frame 140 so that the support frame 120 accommodated in the middle frame 130 rotates and also the optical-reflector 110 mounted to the support frame 120 rotates.

A central portion of FIG. 14 depicts a reference state where optical image stabilization in a Y-axial direction is not performed.

If an electromagnetic force generated at the second coil 150-2 rotates the middle frame 130 in a clockwise direction as shown in a left portion of FIG. 14, the optical-reflector 110 also rotates in the same direction accordingly, and so the input light makes a displacement d1 in a left direction. Thus, in view of a lens or a photographing device such as CCD, correction is made in the Y-axial direction (a left direction based on FIG. 14).

In a corresponding viewpoint, if an electromagnetic force generated at the second coil 150-2 rotates the middle frame 130 in a counterclockwise direction as shown in a right portion of FIG. 14, the input light makes a displacement d2 in a right direction, and so, in view of a lens or a photographing device such as CCD, correction is made in a Y-axial direction (a right direction based on FIG. 14).

Even though the embodiment of the present disclosure has been described based on an example where the support frame 120 rotates in an X-axial direction and the middle frame 130 rotates in a Y-axial direction, it is also possible that the support frame 120 rotates in a Y-axial direction and the middle frame 130 rotates in an X-axial direction depending on embodiments, as long as they rotate in directions perpendicular to each other.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

In the above description of this specification, the terms such as "first", "second", and "sub" etc., are merely conceptual terms used to relatively identify components from each other, and thus they should not be interpreted as terms used to denote a particular order, priority or the like.

The drawings for illustrating the present disclosure and its embodiments may be shown in somewhat exaggerated form in order to emphasize or highlight the technical contents of the present disclosure, but it should be understood that various modifications may be made by those skilled in the art in consideration of the above description and the illustrations of the drawings without departing from the scope of the present invention defined by the appended claims.

## Claims

1. An apparatus (100) for driving an optical-reflector with a multi-axial structure, comprising:
a support frame (120) having a first groove rail (123) formed therein;
an optical-reflector (110) disposed on the support frame (120) to reflect light to a lens;
a middle frame (130) having a first guide rail (131) corresponding to the first groove rail (123) and a second groove rail (137) formed therein;
a base frame (140) having a second guide rail (141) formed corresponding to the second groove rail (137);
a first driving unit (150-1) configured to move the support frame (120) in a first direction on the basis of the middle frame (130); and
a second driving unit (150-2) configured to move the middle frame (130) in a second direction perpendicular to the first direction, on the basis of the base frame (140), wherein the first groove rail (123) elongates in the first direction and guides rotation in the first direction and has a rounded shape, the second groove rail (137) elongates in the second direction and guides rotation in the second direction and has a rounded shape,
wherein the support frame (120) rotates along a path corresponding to the first groove rail (123) or the first guide rail (131) and the middle frame (130) rotates along a path corresponding to the second groove rail (137) or the second guide rail (141).

2. The apparatus for driving an optical-reflector with a multi-axial structure according to claim 1, further comprising:
a first ball (180-2) disposed between the first groove rail (123) and the first guide rail (131); and
a second ball (180-2) disposed between the second groove rail (123) and the second guide rail (141);

3. The apparatus for driving an optical-reflector with a multi-axial structure according to claim 1,
wherein the middle frame (130) includes a first plate (130-1) and a second plate (130-2) perpendicular to the first plate (130-1), and
wherein the first guide rail (131) is formed at an inner side of the first plate (130-1), and the second groove rail (137) is formed at an outer side of the second plate (130-2).

4. The apparatus for driving an optical-reflector with a multi-axial structure according to claim 1,
wherein the first groove rail (123) and the second groove rail (137) are formed perpendicular to each other.

5. The apparatus for driving an optical-reflector with a multi-axial structure according to claim 1,
wherein the support frame (120) has a first magnet (121),
wherein the middle frame (130) has a second magnet (135), and
wherein the first driving unit (150-1) is a first coil (150) which generates an electromagnetic force to the first magnet (121), and the second driving unit (150-2) is a second coil (150-2) which generates an electromagnetic force to the second magnet (135).

6. The apparatus for driving an optical-reflector with a multi-axial structure according to claim 5,
wherein the first magnet (121) is respectively provided at a left side and a right side symmetric to each other based on a center portion of the support frame (120).

7. The apparatus for driving an optical-reflector with a multi-axial structure according to claim 6, further comprising:
a first yoke (133) provided at the middle frame (130) at a location facing the first magnet (121), respectively.

8. The apparatus for driving an optical-reflector with a multi-axial structure according to claim 5,
wherein two first groove rails (123) are arranged in parallel on one surface of the support frame (120),
wherein the support frame (120) includes a mounting portion (125) protruding at a center portion of the two first groove rails (123) so that the first magnet (121) is mounted thereto, and
wherein the middle frame (130) has an opening (139) formed at a portion facing the first magnet (121).

9. The apparatus for driving an optical-reflector with a multi-axial structure according to claim 5,
wherein any one of the first and second magnets (121, 135) has a single polarity, and the other has two or more polarities.

10. The apparatus for driving an optical-reflector with a multi-axial structure according to claim 9, further comprising:
a sub magnet (220) located on the support frame (120) to be spaced apart from the first magnet (121); and
a hall sensor (151) positioned corresponding to the sub magnet (220),
wherein the first magnet (121) has a single polarity at a surface thereof that faces the first coil (150-1), and the sub magnet (220) has two or more polarities at a surface thereof that faces the hall sensor (151).

11. The apparatus for driving an optical-reflector with a multi-axial structure according to claim 9, further comprising:
a sub magnet (230) located on the middle frame (130) to be spaced apart from the second magnet (135); and
a hall sensor (250-2) positioned corresponding to the sub magnet (230),
wherein the second magnet (135) has a single polarity at a surface thereof that faces the second coil (150-2), and the sub magnet (230) has two or more polarities at a surface thereof that faces the hall sensor (250-2).

12. The apparatus for driving an optical-reflector with a multi-axial structure according to claim 5,
wherein the middle frame (130) further includes a yoke (161) at a side thereof that faces the first magnet (121).

13. The apparatus for driving an optical-reflector with a multi-axial structure according to claim 5,
wherein the base frame (140) further includes a yoke (161) at a side thereof that faces the second magnet (135).

14. The apparatus for driving an optical-reflector with a multi-axial structure according to claim 1,
wherein the first guide rail (131) is formed at an inner side of the middle frame (130), and the second groove rail (137) is formed at an outer side of the middle frame (130).

## Patentansprüche

1. Vorrichtung (100) zum Antreiben eines optischen Reflektors mit einer mehrachsigen Struktur, mit:
einem Stützrahmen (120) mit einer darin ausgebildeten ersten Rillenschiene (123) ;
einem optischen Reflektor (110), der auf dem Stützrahmen (120) angeordnet ist, um Licht zu einer Linse zu reflektieren;
einem Mittelrahmen (130) mit einer ersten Führungsschiene (131), die der ersten Rillenschiene (123) entspricht, und einer darin ausgebildeten zweiten Rillenschiene (137);
einem Basisahmen (140) mit einer zweiten Führungsschiene (141), die entsprechend der zweiten Rillenschiene (137) ausgebildet ist;
einer ersten Antriebseinheit (150-1), die dazu ausgebildet ist, den Stützrahmen (120) auf der Basis des Mittelrahmens (130) in einer ersten Richtung zu bewegen; und
eine zweite Antriebseinheit (150-2), die dazu ausgebildet ist, den Mittelrahmen in einer zu der ersten Richtung senkrecht verlaufenden zweiten Richtung auf der Basis des Basisrahmens (140) zu bewegen,
wobei sich die erste Rillenschiene (123) in der ersten Richtung erstreckt und Drehung in der ersten Richtung führt und eine abgerundete Form aufweist, und sich die zweite Rillenschiene (137) in der zweiten Richtung erstreckt und Drehung in der ersten Richtung führt und eine abgerundete Form aufweist,
wobei der Stützrahmen (120) sich entlang eines Weges dreht, welcher der ersten Rillenschiene (123) oder der ersten Führungsschiene (131) entspricht, und der Mittelrahmen (130) sich entlang eines Weges dreht, welcher der zweiten Rillenschiene (137) oder der zweiten Führungsschiene (141) entspricht.

2. Vorrichtung zum Antreiben eines optischen Reflektors mit einer mehrachsigen Struktur nach Anspruch 1, ferner mit:
einer zwischen der ersten Rillenschiene (123) und der ersten Führungsschiene (131) angeordneten ersten Kugel (180-2); und
einer zwischen der zweiten Rillenschiene (123) und der zweiten Führungsschiene (141) angeordneten zweiten Kugel (180-2).

3. Vorrichtung zum Antreiben eines optischen Reflektors mit einer mehrachsigen Struktur nach Anspruch 1, bei welcher
der Mittelrahmen (130) eine erste Platte (130-1) und eine orthogonal zu der ersten Platte (130-1) verlaufende zweite Platte (130-2) aufweist, und
wobei die erste Führungsschiene (131) an einer Innenseite der ersten Platte (130-1) ausgebildet ist und die zweite Rillenschiene (137) an einer Außenseite der zweiten Platte (130-2) ausgebildet ist.

4. Vorrichtung zum Antreiben eines optischen Reflektors mit einer mehrachsigen Struktur nach Anspruch 1, bei welcher die erste Rillenschiene (123) und die zweite Rillenschiene (137) orthogonal zueinander ausgebildet sind.

5. Vorrichtung zum Antreiben eines optischen Reflektors mit einer mehrachsigen Struktur nach Anspruch 1, bei welcher
der Stützrahmen (120) einen ersten Magneten (121) aufweist,
wobei der Mittelrahmen (130) einen zweiten Magneten (135) aufweist, und
wobei die erste Antriebseinheit (150-1) eine erste Spule (150) ist, welche eine elektromagnetische Kraft auf den ersten Magneten (121) erzeugt, und die zweite Antriebseinheit (150-2) eine zweite Spule (150-2) ist, welche eine elektromagnetische Kraft auf den zweiten Magneten (135) erzeugt.

6. Vorrichtung zum Antreiben eines optischen Reflektors mit einer mehrachsigen Struktur nach Anspruch 5, bei welcher der erste Magnet (121), basierend auf einem Mittelabschnitt des Stützrahmens (120), jeweils auf einer linken Seite und einer rechten Seite symmetrisch zueinander vorgesehen ist.

7. Vorrichtung zum Antreiben eines optischen Reflektors mit einer mehrachsigen Struktur nach Anspruch 6, ferner mit: einem ersten Joch (133), das an dem Mittelrahmen (130) an einer dem ersten Magneten (121) zugewandten Stelle vorgesehen ist.

8. Vorrichtung zum Antreiben eines optischen Reflektors mit einer mehrachsigen Struktur nach Anspruch 5, bei welcher zwei erste Rillenschienen (123) parallel auf einer Oberfläche des Stützrahmens (120) angeordnet sind, wobei der Stützrahmen (120) einen Montagebereich (125) aufweist, der an einem Mittelbereich der beiden ersten Rillenschienen (123) vorsteht, so dass der erste Magnet (121) daran angebracht ist, und wobei der Mittelrahmen (130) eine Öffnung (139) aufweist, die in einem dem ersten Magneten (121) zugewandten Bereich ausgebildet ist.

9. Vorrichtung zum Antreiben eines optischen Reflektors mit einer mehrachsigen Struktur nach Anspruch 5, bei welcher der erste oder der zweite Magnet (121, 135) eine einzige Polarität aufweist und der andere zwei oder mehr Polaritäten aufweist.

10. Vorrichtung zum Antreiben eines optischen Reflektors mit einer mehrachsigen Struktur nach Anspruch 9, ferner mit:
einem auf dem Stützrahmen (120) von dem ersten Magneten (121) beabstandet angeordneten Untermagneten (220); und
einem Hallsensor, der entsprechend dem Submagneten positioniert ist,
wobei der erste Magnet (121) an einer seiner Oberflächen, die der ersten Spule zugewandt (150-1) ist, eine einzige Polarität aufweist und der Untermagnet (220) an einer seiner Oberflächen, die dem Hallsensor (151) zugewandt ist, zwei oder mehr Polaritäten aufweist.

11. Vorrichtung zum Antreiben eines optischen Reflektors mit einer mehrachsigen Struktur nach Anspruch 9, ferner mit:
einem auf dem Mittelrahmen (130) von dem zweiten Magneten (135) beabstandet angeordneten Untermagneten (230); und
einem Hallsensor (250-2), der entsprechend dem Untermagneten (230) positioniert ist,
wobei der zweite Magnet (135) an einer seiner Oberflächen, die der zweiten Spule (150-2) zugewandt ist, eine einzige Polarität aufweist und der Untermagnet (230) an einer seiner Oberflächen, die dem Hallsensor (250-2) zugewandt ist, zwei oder mehr Polaritäten aufweist.

12. Vorrichtung zum Antreiben eines optischen Reflektors mit einer mehrachsigen Struktur nach Anspruch 5, bei welcher der Mittelrahmen (130) ferner ein Joch (161) an einer Seite davon aufweist, die dem ersten Magneten (121) zugewandt ist.

13. Vorrichtung zum Antreiben eines optischen Reflektors mit einer mehrachsigen Struktur nach Anspruch 7, bei welcher der Grundrahmen (140) ferner ein Joch (161) an einer seiner Seiten aufweist, die dem zweiten Magneten (135) zugewandt ist.

14. Vorrichtung zum Antreiben eines optischen Reflektors mit einer mehrachsigen Struktur nach Anspruch 1, bei welcher die erste Führungsschiene (131) an einer Innenseite des Mittelrahmens (130) ausgebildet ist und die zweite Rillenschiene (137) an einer Außenseite des Mittelrahmens (130) ausgebildet ist.

## Revendications

1. Appareil (100) destiné à entraîner un réflecteur optique ayant une structure multiaxiale, comprenant :
un cadre de support (120) ayant un premier rail à gorge (123) formé en son sein ;
un réflecteur optique (110) disposé sur le cadre de support (120) pour réfléchir de la lumière vers une lentille ;
un cadre intermédiaire (130) ayant un premier rail de guidage (131) correspondant au premier rail à gorge (123) et un second rail à gorge (137) formé en son sein ;
un cadre de base (140) ayant un second rail de guidage (141) formé en correspondance avec le second rail à gorge (137) ;
une première unité d'entraînement (150-1) configurée pour déplacer le cadre de support (120) dans une première direction sur la base du cadre intermédiaire (130) ; et
une seconde unité d'entraînement (150-2) configurée pour déplacer le cadre intermédiaire (130) dans une seconde direction perpendiculaire à la première direction, sur la base du cadre de base (140),
dans lequel le premier rail à gorge (123) s'allonge dans la première direction et guide une rotation dans la première direction et a une forme arrondie, le second rail à gorge (137) s'allonge dans la seconde direction et guide une rotation dans la seconde direction et a une forme arrondie,
dans lequel le cadre de support (120) tourne suivant un trajet correspondant au premier rail à gorge (123) ou au premier rail de guidage (131) et le cadre intermédiaire (130) tourne suivant un trajet correspondant au second rail à gorge (137) ou au second rail de guidage (141).

2. Appareil destiné à entraîner un réflecteur optique ayant une structure multi-axiale selon la revendication 1, comprenant en outre :
une première bille (180-2) disposée entre le premier rail à gorge (123) et le premier rail de guidage (131) ; et
une seconde bille (180-2) disposée entre le second rail à gorge (123) et le second rail de guidage (141).

3. Appareil destiné à entraîner un réflecteur optique ayant une structure multi-axiale selon la revendication 1,
dans lequel le cadre intermédiaire (130) comporte une première plaque (130-1) et une seconde plaque (130-2) perpendiculaire à la première plaque (130-1), et
dans lequel le premier rail de guidage (131) est formé au niveau d'un côté interne de la première plaque (130-1), et le second rail à gorge (137) est formé au niveau d'un côté externe de la seconde plaque (130-2).

4. Appareil destiné à entraîner un réflecteur optique ayant une structure multi-axiale selon la revendication 1,
dans lequel le premier rail à gorge (123) et le second rail à gorge (137) sont formés perpendiculairement l'un à l'autre.

5. Appareil destiné à entraîner un réflecteur optique ayant une structure multi-axiale selon la revendication 1,
dans lequel le cadre de support (120) a un premier aimant (121),
dans lequel le cadre intermédiaire (130) a un second aimant (135), et
dans lequel la première unité d'entraînement (150-1) est une première bobine (150) qui génère une force électromagnétique vers le premier aimant (121), et la seconde unité d'entraînement (150-2) est une seconde bobine (150-2) qui génère une force électromagnétique vers le second aimant (135).

6. Appareil destiné à entraîner un réflecteur optique ayant une structure multi-axiale selon la revendication 5,
dans lequel le premier aimant (121) est prévu respectivement au niveau d'un côté gauche et d'un côté droit symétriques l'un à l'autre selon une portion de centre du cadre de support (120).

7. Appareil destiné à entraîner un réflecteur optique ayant une structure multi-axiale selon la revendication 6, comprenant en outre :
une première culasse (133) prévue au niveau du cadre intermédiaire (130) à un emplacement face au premier aimant (121), respectivement.

8. Appareil destiné à entraîner un réflecteur optique ayant une structure multi-axiale selon la revendication 5,
dans lequel deux premiers rails à gorge (123) sont agencés en parallèle sur une surface du cadre de support (120),
dans lequel le cadre de support (120) comporte une portion de montage (125) en saillie au niveau d'une portion de centre des deux premiers rails à gorge (123) de sorte que le premier aimant (121) soit monté sur celle-ci, et
dans lequel le cadre intermédiaire (130) a une ouverture (139) formée au niveau d'une portion face au premier aimant (121).

9. Appareil destiné à entraîner un réflecteur optique ayant une structure multi-axiale selon la revendication 5,
dans lequel l'un quelconque des premier et second aimants (121, 135) a une polarité unique, et l'autre a deux polarités ou plus.

10. Appareil destiné à entraîner un réflecteur optique ayant une structure multi-axiale selon la revendication 9, comprenant en outre :
un sous-aimant (220) situé sur le cadre de support (120) pour être espacé du premier aimant (121) ; et
un capteur à effet hall (151) positionné en correspondance avec le sous-aimant (220),
dans lequel le premier aimant (121) a une polarité unique au niveau d'une surface de celui-ci qui fait face à la première bobine (150-1), et le sous-aimant (220) a deux polarités ou plus au niveau d'une surface de celui-ci qui fait face au capteur à effet hall (151).

11. Appareil destiné à entraîner un réflecteur optique ayant une structure multi-axiale selon la revendication 9, comprenant en outre :
un sous-aimant (230) situé sur le cadre intermédiaire (130) pour être espacé du second aimant (135) ; et
un capteur à effet hall (250-2) positionné en correspondance avec le sous-aimant (230),
dans lequel le second aimant (135) a une polarité unique au niveau d'une surface de celui-ci qui fait face à la seconde bobine (150-2), et le sous-aimant (230) a deux polarités ou plus au niveau d'une surface de celui-ci qui fait face au capteur à effet hall (250-2).

12. Appareil destiné à entraîner un réflecteur optique ayant une structure multi-axiale selon la revendication 5,
dans lequel le cadre intermédiaire (130) comporte en outre une culasse (161) au niveau d'un côté de celui-ci qui fait face au premier aimant (121).

13. Appareil destiné à entraîner un réflecteur optique ayant une structure multi-axiale selon la revendication 5,
dans lequel le cadre de base (140) comporte en outre une culasse (161) au niveau d'un côté de celui-ci qui fait face au second aimant (135).

14. Appareil destiné à entraîner un réflecteur optique ayant une structure multiaxiale selon la revendication 1,
dans lequel le premier rail de guidage (131) est formé au niveau d'un côté interne du cadre intermédiaire (130), et le second rail à gorge (137) est formé au niveau d'un côté externe du cadre intermédiaire (130).
